# EUROPEAN PATENT APPLICATION

(11) **EP 2 627 157 A1**
(43) Date of publication of application: **14.08.2013**
(21) Application number: 11830502.8
(22) Date of filing: 21.09.2011
(51) Int. Cl.: H05B 37/02, H01L 33/00

(54) **POWER SUPPLY DEVICE AND LIGHTING DEVICE**

(30) Priority: 08.10.2010 JP 2010228888
(71) Applicant: Sharp Kabushiki Kaisha, Osaka-shi, Osaka 545-8522 (JP)
(72) Inventor: UHARA, Hiroto, Osaka-shi, Osaka 545-8522 (JP)
(74) Representative: Treeby, Philip David William
(86) International application number: PCT/JP2011/071412
(87) International publication number: WO 2012/046569

(57) **Abstract**

A power source apparatus and a lighting apparatus capable of suppressing an operation that a light source is turned on in a state where brightness of the light source is higher than brightness which was set by a light adjusting function are provided.

When a turn on signal or a turn off signal is input from a receiving unit 87 to a controller 86, the controller 86 outputs the turn on signal or the turn off signal to a voltage setting unit 82. When the turn on signal is input, the voltage setting unit 82 sets an upper limit value of a voltage Vₒᵤₜ supplied from a power source circuit 81 to a LED module 3 to a lighting upper limit value. When the turn off signal is input, the voltage setting unit 82 sets an upper limit value of the voltage Vₒᵤₜ supplied from the power source circuit 81 to the LED module 3 to a switching upper limit value lower than the lighting upper limit value.

## Description

### [Technical Field]

The present invention relates to a power source apparatus supplying electricity to a light source, particularly, a power source apparatus having a function of adjusting the light source and a lighting apparatus including the same.

### [Background Art]

In recent years, as light emitting diodes (LEDs) have higher luminance, in place of light sources such as incandescent lamps and fluorescent lamps, LEDs having features of low power consumption, long life and the like have come into widespread use as light sources in lighting apparatuses or the like. In such a lighting apparatus, a power source apparatus including a light adjusting circuit for adjusting LEDs is contained.

For example, there is a power source apparatus rectifying an AC voltage by a rectifier circuit and converting a rectified DC voltage into a necessary voltage by a DC-DC converter so as to supply the voltage to LEDs. The DC-DC converter includes a switching transformer, a transistor, a diode, a smoothing capacitor and the like. Furthermore, an AC voltage having a high frequency is once generated at the switching transformer by switching on and off the transistor, and the generated AC voltage is smoothed by the diode and the smoothing capacitor and a necessary DC voltage is output to supply the voltage to the LEDs. The power source apparatus also has a light adjusting function of receiving a light adjusting signal and controlling current provided to the LEDs by controlling the length of off period of the transistor in response to the received light adjusting signal (see Patent Document 1).

### [Prior Technical Document]

### [Patent Document]

[Patent Document 1] Japanese Patent Application Laid-Open No. 2010-67831

### [Summary of the Invention]

### [Problems to be Solved by the Invention]

However, in the lighting apparatus of Patent Document 1, in the case where the lighting apparatus is switched off by a remote control terminal apparatus such as a remote controller in a state of reducing current provided to the LEDs by the light adjusting function, the transistor is switched off, so that the switching transformer is in an unloaded state. Then, by an operation of outputting constant current of the DC-DC converter, an output voltage is raised to an upper limit value of voltage which is decided by a resistance value of a circuit. The smoothing capacitor is charged by the voltage raised to the upper limit value. Due to the electric charge charged at the smoothing capacitor, when the lighting apparatus is switched on again, current is transiently provided to the LEDs as inrush current before the light adjusting operation is completely performed. In other words, there arises a phenomenon that the LEDs are brightly turned on at a moment immediately after the lighting apparatus is switched on, and then brightness of the LEDs is returned, i. e. reduced, to brightness corresponding to a level which was set by the light adjusting function before the lighting apparatus is switched off. This may possibly cause the user to misunderstand that the lighting apparatus has a failure or to feel uncomfortable using it.

The present invention has been devised in view of this situation. Its object is to provide a power source apparatus and a lighting apparatus including the same capable of suppressing such an opearation that a light source is turned on in a state where brightness of the light source is higher than brightness which was set by the light adjusting function, at a moment immediately after the light source is turned on.

### [Means for Solving Problems]

A power source apparatus according to the present invention is characterized by comprising: a power source circuit; a voltage setting unit setting an upper limit value of a voltage supplied from the power source circuit to a light source; and a constant current circuit supplying to the light source constant current in response to a light adjusting signal, wherein the voltage setting unit sets a switching upper limit value for a time point when a state of the light source is switched from a turn off state to a turn on state and a lighting upper limit value for a state where the light source is turned on, and the switching upper limit value is smaller than the lighting upper limit value.

According to the aspect of the present invention, the voltage setting unit sets the switching upper limit value for a time point when the state of the light source is switched from the turn off state to the turn on state, to a value smaller than the lighting upper limit value for the state where the light source is turned on. When the light source is turned off in a state where a current value supplied to the light source is reduced by the light adjusting signal, since an upper limit value of voltage supplied to the light source (the switching upper limit value) is set to be smaller than an upper limit value for the state where the light source is turned on (the lighting upper limit value), it is possible that a voltage supplied to the light source has a lower voltage value not greater than the switching upper limit value immediately after a state of the light source is switched from the turn off state to the turn on state. Thus, it is possible to suppress such an operation that the light source is brightly turned on at brightness corresponding to a level higher than an adjusted level at a moment immediately after the light source is turned on, and to suppress such an operation that the light source is turned on in a state of brightness higher than brightness set by the light adjusting function.

A power source apparatus according to the present invention is characterized by comprising: an operation stopping unit stopping, when a voltage is input, an operation of the power source circuit if the voltage is larger than a predetermined threshold voltage; and a receiving unit receiving a turn on signal and a turn off signal for turning on and off the light source, respectively, wherein the voltage setting unit includes a voltage dividing unit inputting to the operation stopping unit a voltage obtained by a different division ratio in response to the turn on signal or the turn off signal received by the receiving unit, the voltage dividing unit inputs to the operation stopping unit the threshold voltage corresponding to a value obtained by dividing the switching upper limit value when the receiving unit receives the turn off signal, and the voltage dividing unit inputs to the operation stopping unit the threshold voltage corresponding to a value obtained by dividing the lighting upper limit value when the receiving unit receives the turn on signal.

According to the aspect of the present invention, the power source apparatus comprises: the operation stopping unit stopping, when the voltage is input, the operation of the power source circuit if the voltage is larger than the predetermined threshold voltage; and the receiving unit receiving the turn on signal and the turn off signal for turning on and off the light source, respectively, and the voltage setting unit includes the voltage dividing unit inputting to the operation stopping unit the voltage obtained by the different division ratio in response to the turn on signal or the turn off signal received by the receiving unit. The voltage dividing unit inputs to the operation stopping unit the threshold voltage corresponding to the value obtained by dividing the switching upper limit value when the receiving unit receives the turn off signal, and the voltage dividing unit inputs to the operation stopping unit the threshold voltage corresponding to the value obtained by dividing the lighting upper limit value when the receiving unit receives the turn on signal. That is, in a state where the light source is turned on, when a value of voltage supplied to the light source has reached the lighting upper limit value, the power source circuit is stopped because a value of a divided voltage input to the operation stopping unit becomes equal to the threshold voltage. On the other hand, when the receiving unit receives the turn off signal, the voltage dividing unit inputs to the operation stopping unit a divided voltage equal to the threshold voltage if a voltage provided to the light source has reached the switching upper limit value. In other words, the divided voltage input to the operation stopping unit becomes equal to the threshold voltage when a voltage supplied to the light source has reached the switching upper limit value immediately after a state of the light source is switched from the turn off state to the turn on state, so that the power source circuit is stopped. Accordingly, immediately after the light source is turned on, an upper limit value of voltage supplied to the light source is set to the switching upper limit value smaller (lower) than an upper limit value in a state where the light source is turned on, whereby it is possible to prevent the light source from being supplied with a high voltage immediately after the light source is turned on.

A power source apparatus according to the present invention is characterized in that the voltage dividing unit includes a series circuit having a plurality of resistance elements connected in series and a switching resistor which is connected in series or parallel to one of the resistance elements in the series circuit and switches between a conduction state and a non-conduction state in response to the turn on signal and the turn off signal received by the receiving unit.

According to the aspect of the present invention, the voltage dividing unit includes the series circuit having the plurality of resistance elements connected in series and the switching resistor which is connected in series or parallel to one of the resistance elements in the series circuit and switches between the conduction state and the non-conduction state in response to the turn on signal and the turn off signal received by the receiving unit. For example, the switching resistor switching between the conduction state and the non-conduction state in response to the turn off signal or the turn on signal is disposed to be connected in parallel to one resistance element of the series circuit. Further, a state of the switching resistor is switched to the non-conduction state when the turn on signal is received, so that a voltage divided at the voltage dividing unit is decreased and a voltage (an upper limit value) supplied to the light source when a divided voltage is equal to the threshold voltage is increased. Furthermore, a state of the switching resistor is switched to the conduction state when the turn off signal is received, so that a voltage divided at the voltage dividing unit is increased and a voltage (an upper limit value) supplied to the light source when a divided voltage becomes equal to the threshold voltage is decreased. The switching resistor switching between the conduction state and the non-conduction state in response to the turn off signal or the turn on signal is disposed to be connected in series to one resistance element of the series circuit. Moreover, a state of the switching resistor is switched to the conduction state when the turn on signal is received, so that a voltage divided at the voltage dividing unit is decreased and a voltage (an upper limit value) supplied to the light source when a divided voltage becomes equal to the threshold voltage is increased. In addition, a state of the switching resistor is switched to the non-conduction state (the switching resistor is short-circuited) when the turn off signal is received, so that a voltage divided at the voltage dividing unit is increased and a voltage (an upper limit value) supplied to the light source when a divided voltage becomes equal to the threshold voltage is decreased. Accordingly, with a simplified configuration, it is possible to change an upper limit value of voltage supplied to the light source when the light source is turned on and off (when a state of the light source is switched from the turn off state to the turn on state).

A lighting apparatus according to the present invention is characterized by comprising a light source and a power source apparatus according to any one of the above-mentioned inventions.

According to the aspect of the present invention, it is possible to achieve the lighting apparatus capable of preventing the light source from being turned on in a state where brightness of the light source is higher than brightness which was set by the light adjusting function.

The lighting apparatus according to the present invention is characterized in that the light source is formed by connecting a plurality of LEDs in series and the voltage setting unit sets the switching upper limit value to be smaller than a sum of forward voltage values of the plurality of LEDs.

According to the aspect of the present invention, the voltage setting unit sets the switching upper limit value smaller than the sum of forward voltage values of a predetermined number of LEDs. The predetermined number, for example, is the number of LEDs which are connected in series in a LED module used as a light source. Therefore, when the series circuit of LEDs is used for the light source, a voltage supplied to the LED module is set to a voltage smaller than the sum of forward voltage values of the plurality of LEDs. Accordingly, since current is not provided to LEDs immediately after the light source is turned on, it is possible to accurately prevent the light source from being turned on in a state where brightness of the light source is higher than brightness which was set by the light adjusting function.

### [Effects of the Invention]

According to the present invention, it is possible to prevent the light source from being turned on in a state where brightness of the light source is higher than brightness which was set by the light adjusting function, at a moment immediately after the light source is turned on.

### [Brief Description of the Drawings]

FIG. 1 is an outline view of a lighting apparatus according to an embodiment.
FIG. 2 is an exploded perspective view of a main part of a lighting apparatus according to an embodiment.
FIG. 3 is a block diagram illustrating an example of a configuration of a power source according to an embodiment.
FIG. 4 is a circuit diagram illustrating an example of a configuration of a power source according to an embodiment.
FIG. 5 is a time chart illustrating an example of a waveform of current provided to a LED module when the LED module is turned on again after it is truned off in a light adjusting state of a comparative example.
FIG. 6 is a time chart illustrating an example of a waveform of current provided to a LED module when the LED module is turned on again after it is turned off in a light adjusting state by a power source according to an embodiment.

### [Mode for Carrying Out the Invention]

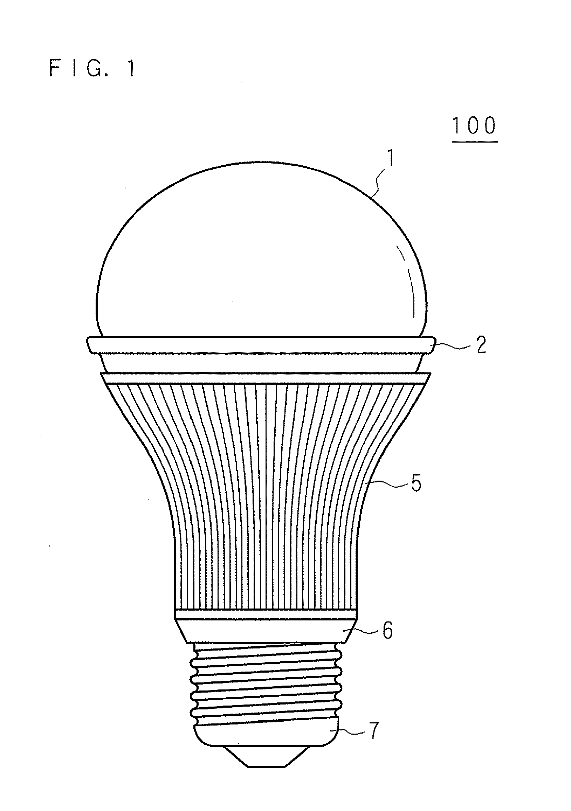

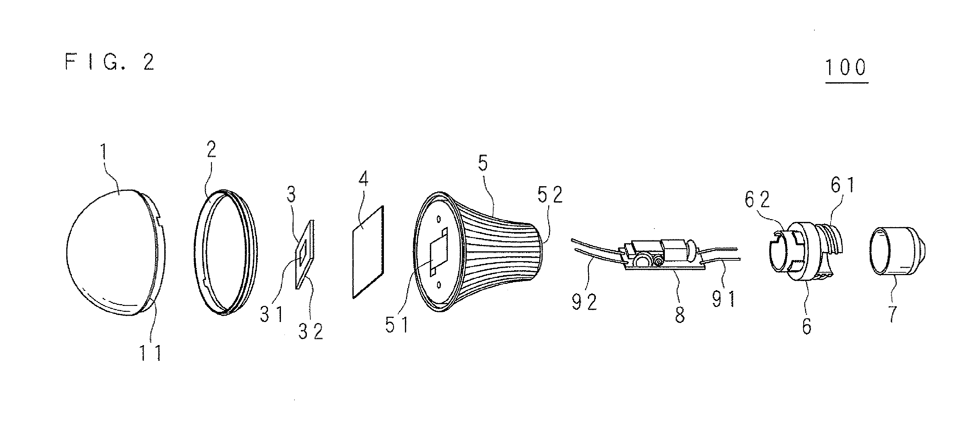

The present invention is described below with reference to the drawings illustrating an embodiment. FIG. 1 is an outline view of a lighting apparatus 100 according to the present embodiment. FIG. 2 is an exploded perspective view of a main part of the lighting apparatus 100 according to the present embodiment. The lighting apparatus 100 is, for example, a LED electric bulb of 40 W, 60 W or the like. Here, though the LED electric bulb is described below by example only, the lighting apparatus 100 is not limited to the LED electric bulb. For example, a lighting apparatus that has another shape or structure may be employed.

As illustrated in FIG. 1, in the outline view, the lighting apparatus 100 includes: a cap 7 to be inserted into a socket outside so as to be electrically connected to a commercial power source; a heat sink 5 having a hollow (cylindrical) shape so as to release heat generated by the lighting apparatus 100; a cylindrical insulating member 6 linking the cap 7 and the heat sink 5 to each other and electrically insulating them; a substantially disk-shaped resin ring 2 holding on the heat sink 5 a later-described LED module serving as a light source; and a cover 1 having the shape of a substantially semispherical shell.

As illustrated in FIGS.1-2, the cap 7 is, for example, a socket of E26 cap standard, and has a hollow part. A screw thread is provided around the cap 7. Here, the employed cap standard may be other than E26. That is, another cap standard such as E17 may be employed.

The insulating member 6 has a cylindrical shape and is fabricated from, for example, polybutylene terephthalate (hereinafter referred to as PBT) resin which is excellent in heat resistance, chemical resistance, electrical property (insulation), dimensional stability, formability, fire retardancy and the like. Here, employable construction materials are not limited to PBT resin. For example, ABS resin may be employed that has an electrically insulating property.

The cap side of the insulating member 6 has a cylindrical connection part 61 provided inside the cap 7. In the connection part 61, a male screw thread to be screwed into a female screw whose screw thread is formed on the inner peripheral surface of the cap 7 is formed on the outer periphery of the connection part 61. Thus, the cap 7 and the insulating member 6 may be attached to each other by merely screwing. This avoids the necessity of screws and hence simplifies the assembling work.

The heat sink side of the insulating member 6 has an inserted part 62 to be inserted into an open part 52 of the heat sink 5. The inserted part 62 has a fitting part to be fitted to a fixing piece of the heat sink 5. That is, when the fitting part is merely fitted to the fixing piece, the heat sink 5 and the insulating member 6 may be attached to each other. This avoids the necessity of screws and hence simplifies the assembling work.

In the insulating member 6, the inner peripheral surface has pinching parts (not shown) pinching a power source 8 serving as a power source apparatus. The insulating member 6 pinches the power source 8, so that the power source 8 is located inside the heat sink 5. The power source 8 is connected with a power source line 91 supplying an AC voltage from a commercial power source via the cap 7 and a wire 92 supplying necessary electricity to a LED module 3. Here, the details of the power source 8 serving as a power source apparatus will be described later.

For example, the heat sink 5 is fabricated from metal such as aluminum having excellent thermal conductivity, and has a hollow cylindrical shape. For example, the heat sink 5 is fabricated by press working. Thus, the thickness of the heat sink 5 is reduced to achieve weight reduction. In the heat sink 5, one end side has a mounting surface 51 on which the LED module 3 is mounted. The other end side has a circular open part 52 through which the inserted part 62 of the insulating member 6 is inserted into the hollow part of the heat sink 5. Here, employable methods of fabrication of the heat sink 5 are not limited to press working, and may be die casting.

The LED module 3 includes a base 32 having a rectangular shape and an LED 31 mounted on the base 32. The LED module 3 is composed of, for example, a plurality of LEDs 31 (e.g., a structure in which one or more series circuits, connected in parallel, each including four LEDs 31) provided on the base 32 composed of a ceramic substrate. The LED module 3 is an LED module of so-called chip-on-board type in which the plurality of LEDs 31 are sealed with resin material containing fluorescent substance. Here, the LEDs 31 may be white LEDs or LEDs of incandescent lamp color. Alternatively, white LEDs and incandescent lamp color LEDs may be employed in mixture. In the case where white LEDs and incandescent lamp color LEDs are employed in mixture, emission color can be changed between white and incandescent lamp color by controlling the lighting states of the individual LEDs.

A receiver (not shown) receiving a transmitted remote signal (for example, a turn on signal, a turn off signal, a light adjusting signal and the like transmitted from a remote control terminal apparatus such as a remote controller) passing through the cover 1 is provided at the base 32. Here, a position of attaching the receiver may be set appropriately.

A heat releasing sheet 4 larger than the size of the LED module 3 (base 32) is arranged between the mounting surface 51 and the LED module 3. For example, the construction material of the heat releasing sheet 4 may be silicone gel. When the heat releasing sheet 4 is located between the base 32 and the heat sink 5 in close contact with them, heat generated by the LED module 3 can be transmitted to the heat sink 5 and hence it is possible to efficiently release the heat through the heat sink 5.

The resin ring 2 has a disk shape and, for example, is fabricated from polycarbonate resin. When the resin ring 2 is locked to the heat sink 5, the LED module 3 is attached to and held on the heat sink 5 by the resin ring 2.

For example, the cover 1 is fabricated from polycarbonate resin of opaque white. The cover 1 has a fitting part 11 on the contact surface with the resin ring 2. When the fitting part 11 is merely fitted into the resin ring 2, the resin ring 2 and the cover 1 are attached to each other. This avoids the necessity of screws and hence simplifies the assembling work.

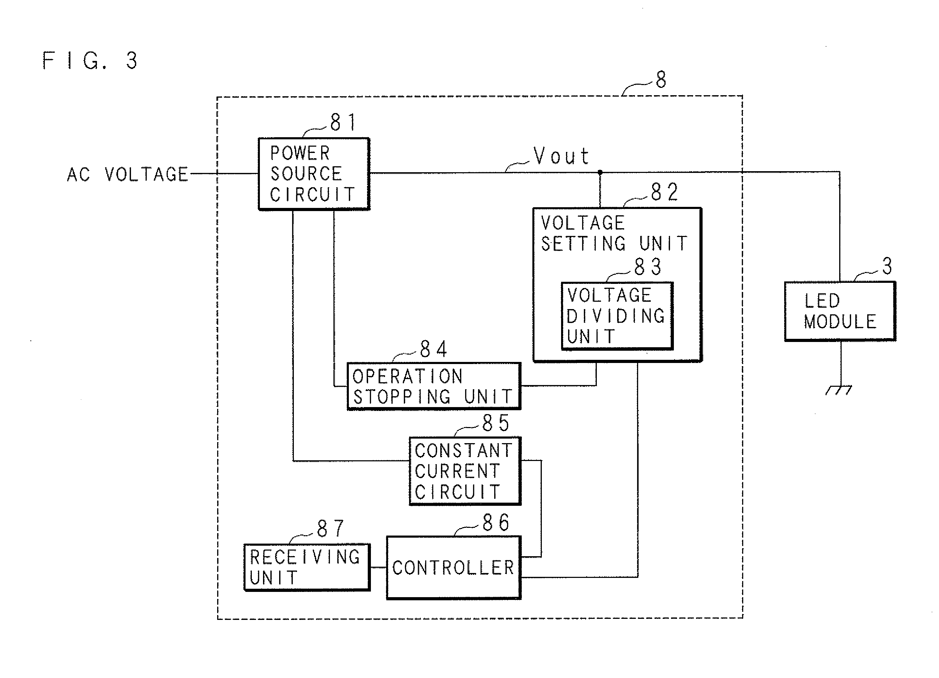

Next, the power source 8 is described below. FIG. 3 is a block diagram illustrating an example of a configuration of the power source 8 according to an embodiment. As illustrated in FIG. 3, the power source 8 includes a power source circuit 81, a voltage setting unit 82 including a voltage dividing unit 83, an operation stopping unit 84, a constant current circuit 85, a controller 86, a receiving unit 87 and the like.

The power source circuit 81 converts an AC voltage supplied from a commercial power source into a necessary DC voltage and supplies the DC voltage to the LED module 3.

The voltage setting unit 82 sets an upper limit value of a voltage Vₒᵤₜ supplied to the LED module 3 by the power source circuit 81. As described later, the upper limit value is a lighting upper limit value for a state where the LED module 3 is turned on or a switching upper limit value for a time point when a state of the LED module 3 is switched from a turn off state to a turn on state. The switching upper limit value is set to a value smaller (lower) than the lighting upper limit value. The voltage setting unit 82 includes the voltage dividing unit 83 inputting to the operation stopping unit 84 a divided voltage obtained by dividing the voltage Vₒᵤₜ supplied to the LED module 3.

The receiving unit 87 receives a turn on signal for turning on the LED module 3 and a turn off signal for turning it off from a remote control terminal apparatus (not shown) such as a remote controller. Thereafter, the received turn on signal and turn off signal are output to the controller 86. The receiving unit 87 receives a light adjusting signal for adjusting the LED module 3, and then the received light adjusting signal is output to the controller 86. Here, the power source 8 may adjust brightness of the LED module 3 within a range of 0 to 100% based on the light adjusting signal.

When the turn on signal or the turn off signal is input from the receiving unit 87 to the controller 86, the controller 86 outputs the turn on signal or the turn off signal to the voltage setting unit 82 (voltage dividing unit 83). On the other hand, when the light adjusting signal is input from the receiving unit 87 to the controller 86, the controller 86 outputs the light adjusting signal to the constant current circuit 85.

When a voltage is input from the voltage setting unit 82 (voltage dividing unit 83) to the operation stopping unit 84, the operation stopping unit 84 stops an operation of the power source circuit 81 if the voltage is larger than a predetermined threshold voltage Vt. For example, when a voltage not less than the threshold voltage Vt is input to the operation stopping unit 84, the operation stopping unit 84 outputs a stop signal for stopping the operation of the power source circuit 81. Here, when a voltage not greater than the threshold voltage Vt is input to the operation stopping unit 84, the operation stopping unit 84 may output the stop signal for stopping the operation of the power source circuit 81.

When the receiving unit 87 receives the turn on signal, the voltage dividing unit 83 inputs to the operation stopping unit 84 a divided voltage equal to the threshold voltage Vt if the voltage Vₒᵤₜ supplied to the LED module 3 has reached a lighting upper limit value. On the other hand, when the receiving unit 87 receives the turn off signal, the voltage dividing unit 83 inputs to the operation stopping unit 84 a divided voltage equal to the threshold voltage Vt if the voltage Vₒᵤₜ supplied to the LED module 3 has reached a switching upper limit value.

The constant current circuit 85 controls an operation of the power source circuit 81 so as to supply to the LED module 3 constant current in response to the light adjusting signal input from the controller 86.

As described above, when a state of the LED module 3 is a turn off state, the voltage setting unit 82 sets the switching upper limit value corresponding to an upper limit value of the voltage Vₒᵤₜ supplied to the LED module 3, and sets the lighting upper limit value corresponding to an upper limit value of the voltage Vₒᵤₜ for a state where the LED module 3 is turned on. The switching upper limit value is set to a value smaller (lower) than the lighting upper limit value. When the LED module 3 is turned off in a state where a current value supplied to the LED module 3 is reduced by the light adjusting signal, since the upper limit value of the voltage Vₒᵤₜ supplied to the LED module 3 (the switching upper limit value) is set to be lower than an upper limit value for a state where the LED module 3 is turned on (the lighting upper limit value), it is possible that the voltage Vₒᵤₜ supplied to the LED module 3 has a low voltage value not greater than the switching upper limit value immediately after a state of the LED module 3 is switched from the turn off state to the turn on state. Thus, it is possible to suppress the LED module 3 being brighter than an adjusted level at a moment immediately after it is turned on, and to suppress the LED module 3 being turned on in a state of brightness higher than brightness set by the light adjusting function.

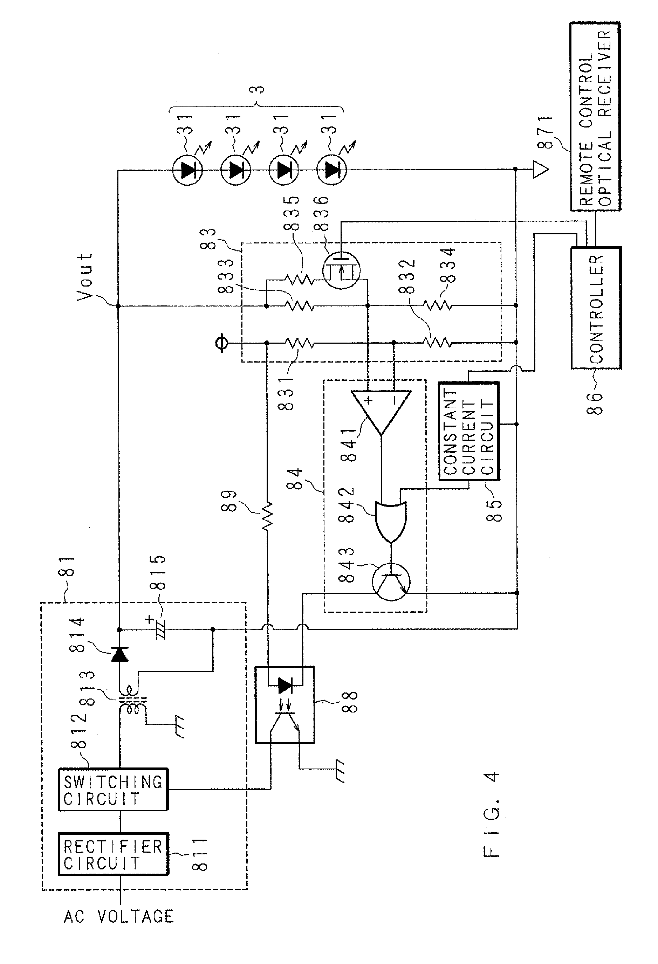

Next, a specific example of a configuration of the power source 8 is described. FIG. 4 is a circuit diagram illustrating an example of a configuration of the power source 8 according to an embodiment. As illustrated in FIG.4, the power source circuit 81 includes a rectifier circuit 811, a switching circuit 812, a switching transformer 813, a diode 814, a smoothing capacitor 815 and the like. The switching circuit 812 is composed of a switching element such as a transistor or an FET and switches on and off a voltage obtained by rectification in the rectifier circuit 811.

The voltage obtained by rectification is once converted into an AC voltage having a high frequency by the switching transformer 813, and then the AC voltage is converted into a necessary DC voltage by the diode 814 and the smoothing capacitor 815.

The voltage dividing unit 83 includes resistors 831, 832 which are connected in series, resistors 833, 834 which are connected in series, and a resistor 835 and an FET 836 which are connected in parallel to the resistor 833.

The operation stopping unit 84 includes a comparator 841, a logical OR circuit 842, a transistor 843 and the like.

A predetermined voltage (e.g., 5V) is applied to the resistors 831, 832 in the voltage dividing unit 83, and an inverting input (-) of the comparator 841 is connected to a divided voltage obtained by dividing the predetermined voltage at the resistors 831, 832. A voltage (divided voltage) input to the inverting input (-) of the comparator 841 is the above-mentioned threshold voltage Vt, which corresponds to for example, 1.25V.

A non-inverting input (+) of the comparator 841 is connected to a divided voltage obtained by dividing the voltage Vₒᵤₜ supplied to the LED module 3 (e.g., series circuit composed of four LEDs 31) by the resistors 833, 834.

For example, the receiving unit 87 is a remote control optical receiver 871. When the remote control optical receiver 871 receives the turn on signal, the turn off signal and the light adjusting signal, the received signals are output from the remote control optical receiver 871 to the controller 86.

For example, the controller 86 is composed of a microprocessor. When the controller 86 receives the turn off signal from the remote control optical receiver 871, the controller 86 switches on the FET 836. When the controller 86 receives the turn on signal, the controller 86 switches off the FET 836. Moreover, the controller 86 outputs to the constant current circuit 85 a signal in response to a light adjusting signal received from the remote control optical receiver 871.

One input terminal of the logical OR circuit 842 is connected to an output terminal of the comparator 841, while the other input terminal thereof is connected to an output terminal of the constant current circuit 85. An output terminal of the logical OR circuit 842 is connected to a base of the transistor 843, while an output terminal (collector) of the transistor 843 is connected to the switching circuit 812 via a resistor 89 and a photocoupler 88.

Next, an operation of the power source 8 is described with reference to FIGS.3-4. When the receiving unit 87 (remote control optical receiver 871) receives a turn on signal, the voltage dividing unit 83 inputs to the operation stopping unit 84 a divided voltage equal to the threshold voltage Vt if the voltage Vₒᵤₜ supplied to the LED module 3 has reached the lighting upper limit value. That is, in a state where the LED module 3 is turned on, when a value of the voltage Vₒᵤₜ supplied to the LED module 3 has reached the lighting upper limit value, the power source circuit 81 is stopped because the divided voltage input to the operation stopping unit 84 is equal to the threshold voltage Vt. On the other hand, when the receiving unit 87 receives a turn off signal, the voltage dividing unit 83 inputs to the operation stopping unit 84 a divided voltage equal to the threshold voltage Vt if the voltage Vₒᵤₜ supplied to the LED module 3 has reached the switching upper limit value. In other words, in a state where the LED module 3 is turned off, when a value of the voltage Vₒᵤₜ supplied to the LED module 3 has reached the switching upper limit value, the power source circuit 81 is stopped because the divided voltage input to the operation stopping unit 84 is equal to the threshold voltage Vt. Accordingly, immediately after the LED module 3 is turned on, an upper limit value of the voltage Vₒᵤₜ supplied to the LED module 3 is set to the switching upper limit value lower than the upper limit value in a state where the LED module 3 is turned on, whereby it is possible to prevent a high voltage from being supplied to the LED module 3 immediately after the LED module 3 is turned on.

More specifically, as illustrated in FIG.4, when the turn on signal is received, the controller 86 switches off the FET 836 so as to switch the state of the resistor 835 to a non-conduction state, and then the controller 86 performs control in such a manner that a divided voltage obtained by dividing the voltage Vₒᵤₜ by a series circuit of the resistors 833, 834 becomes lower than a divided voltage obtained by the case where the controller 86 receives the turn off signal, while an upper limit value of the voltage Vₒᵤₜ when the divided voltage input to the comparator 841 is equal to the threshold voltage Vt (the lighting upper limit value) becomes higher than the switching upper limit value. For example, the lighting upper limit value is 12.8V. The lighting upper limit value is set to a value higher than the sum of forward voltage values (for example, 3V) of LEDs 31 in the LED module 3.

When the turn off signal is received, the controller 86 switches on the FET 836 so as to switch the state of the resistor 835 to a conduction state, and then the controller 86 performs control in such a manner that a divided voltage obtained by dividing the voltage Vₒᵤₜ by a series circuit composed of the resistor 834 and a parallel circuit of the resistors 833, 835 becomes higher than a divided voltage obtained by the case where the controller 86 receives the turn on signal, while an upper limit value of the voltage Vₒᵤₜ when the divided voltage input to the comparator 841 is equal to the threshold voltage Vt (the switching upper limit value) becomes lower than the lighting upper limit value. For example, the switching upper limit value is 7.2V. The switching upper limit value set to a value lower than the sum of forward voltage values (for example, 3V) of LEDs 31 in the LED module 3.

In other words, a resistance value of a resistor for dividing the voltage Vₒᵤₜ when the controller 86 receives the turn on signal is set to a value higher than a resistance value obtained by the case where the controller 86 receives the turn off signal, so that the switching upper limit value can be lower than the lighting upper limit value. More concretely, the resistor 833 is disposed to be parallely connected to the resistor 835 serving as a switching resistor for switching between the conduction state and the non-conduction state by switching on or off the FET 86 in response to the turn off signal or the turn on signal, so that a resistance value for dividing the voltage Vₒᵤₜ is variable. By switching the state of the resistor 835 to the conduction state in response to the turn off signal, a combined resistance value of the resistors 833, 835 is low as compared with a resistance value of the resistor 833 obtained by the case where the resistor 835 is in the non-conduction state, so that a resistance value for dividing the voltage Vₒᵤₜ is reduced. Here, an element for switching the state of the resistor 835 between the conduction state and the non-conduction state in response to the turn off signal and the turn on signal is not limited to an FET, and may be another switching element such as a bipolar transistor. Accordingly, with a simplified configuration, since a divided ratio of the voltage Vₒᵤₜ obtained by the turn on state can be different from that of the voltage Vₒᵤₜ obtained by the switching state in response to the turn on signal or the turn off signal, it is possible to change the upper limit values of the voltages Vₒᵤₜ supplied to the LED module 3 when it is turned on and off.

Though description has been given for a case of connecting the resistor 833 to the resistor 835 serving as the switching resistor in parallel, the resistor 835 may be connected to the resistor 833 in series so as to switch the state of the resistor 835 between the conduction state and the non-conduction state. In this case, a resistance value for dividing the voltage Vₒᵤₜ is increased by switching the state of the resistor 835 to the conduction state when the controller 86 receives the turn on signal and a resistance value for dividing the voltage Vₒᵤₜ is decreased by switching the state of the resistor 835 to the non-conduction state to be short-circuited when the controller 86 receives the turn off signal, in order to make the switching upper limit value of the voltage Vₒᵤₜ lower than the lighting upper limit value of the voltage Vₒᵤₜ. Accordingly, it is possible to change the upper limit values of the voltages Vₒᵤₜ supplied to the LED module 3 when it is turned on and off. Here, a switching element such as an FET or a bipolar transistor can switch the state of the resistor 835 between the conduction state and the non-conduction state.

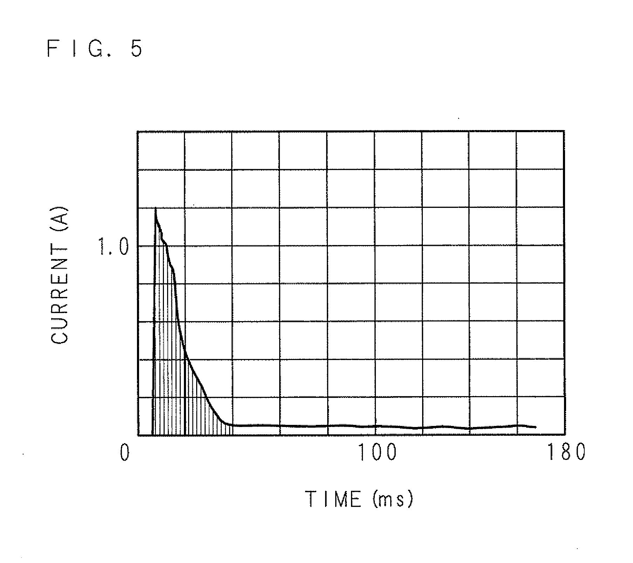

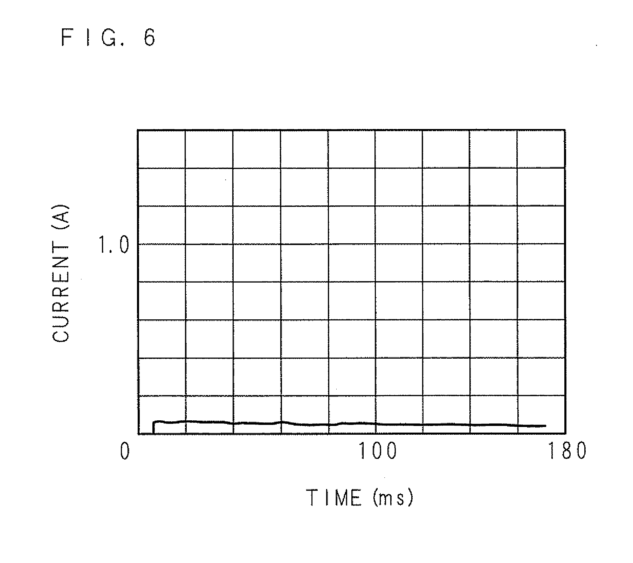

FIG. 5 is a time chart illustrating an example of a waveform of current provided to a LED module when the LED module is turned on again after it is turned off in a light adjusting state as a comparative example. FIG. 6 is a time chart illustrating an example of a waveform of current provided to the LED module 3 when the LED module 3 is turned on again after it is turned off in a light adjusting state by the power source 8 according to an embodiment. In FIGS. 5-6, the horizontal axis represents time and the vertical axis represents current. Further, an adjusted level before turning off the LED module is, for example, a level that a value of current provided to the LED module is approximately 40mA, that is, the adjusted level is a level of approximately 5 to 10% with respect to a level (100%) corresponding to the total light up.

As illustrated in FIG.5, immediately after the LED module is turned on again, inrush current is transiently provided to the LED module (in an example of FIG.5, for example, for a period of approximately 30ms) by a voltage supplied from a DC/DC converter to the LED module before a light adjusting function is performed by a constant current circuit. Accordingly, the LED module is brightly turned on at a moment immediately after it is turned on, and then brightness of the LED module is returned to brightness corresponding to an adjusted level which was set before turning off the LED module. In this way, there arises a phenomenon in a conventional lighting apparatus that LEDs are brightly turned on at a moment immediately after switching on the lighting apparatus, and then brightness of the LEDs is returned, i. e. reduced, to brightness corresponding to a level which was set by the light adjusting function before switching off the lighting apparatus. This may possibly cause the user to misunderstand that the lighting apparatus has a failure or to feel uncomfortable using it.

On the other hand, as illustrated in FIG.6, in the power source 8 and the lighting apparatus 100 according to the embodiment, the switching upper limit value of the voltage Vₒᵤₜ supplied to the LED module 3 is set to a low value in a turn off state, so that a voltage exceeding the switching upper limit value is not provided to the LED module 3. Accordingly, immediately after the LED module 3 is turned on, provision of inrush current to the LED module 3 is suppressed by reducing the voltage Vₒᵤₜ supplied from the power source circuit 81 to the LED module 3, and the lighting upper limit value is set to an upper limit value at a timing when the constant current circuit performs the light adjusting function, so that it is possible to prevent overvoltage from being applied to the LED module 3 in a turn on state.

The switching upper limit value is smaller than the sum of forward voltage values of LEDs 31. Therefore, when the series circuit of LEDs is used for the light source, a voltage supplied to the LED module 3 is set to a voltage smaller than the sum of forward voltage values of the LEDs. Accordingly, since current is not provided to the LED module 3 immediately after it is turned on, it is possible to accurately suppress the LED module 3 being turned on in a state of brightness higher than brightness set by the light adjusting function.

It should be noted that the circuit configuration illustrated in FIG.4 is merely an example and not limited thereto. In addition, when the turn on signal is received from the remote control optical receiver 871, the controller 86 may include a delay circuit delaying the switching off of the FET 836 by a time period (for example, approximately a few tens of ms) required for the constant current circuit 85 to operate at an adjusted level which was set before the LED module 3 is turned off. Accrodingly, an upper limit value of the voltage Vₒᵤₜ is maintained to be the switching upper limit value immediately after the LED module 3 is turned on and the upper limit value can be switched from the switching upper limit value to the lighting upper limit value after an operation of the constant current circuit 85 is started, so that it is possible to accurately prevent inrush current from being provided to the LED module 3. Since it is possible to prevent provision of inrush current, the reliability of the LED module 3 can also be improved by preventing a current value not less than a constant current value from being once provided. In addition, it is possible to achieve a lighting apparatus capable of preventing a light source from being turned on in a state where brightness of the light source is higher than brightness set by the light adjusting function.

As described above, with the lighting apparatus 100 and the power source 8 according to the embodiment, in the case where a light adjusting operation is performed with a remote controller, an operating switch or the like, the light source may be turned on and then turned off in any state of brightness to be turned on again with brightness corresponding to that before the turn off.

In the above-mentioned embodiment, description has been given for a case of a lighting apparatus of electric bulb shape. However, employable shapes of the lighting apparatus are not limited to the electric bulb shape. That is, a lighting apparatuses of another shape such as a buried type lighting apparatus (so-called downlight) may be employed. Further, description has been given for a case of a lighting apparatus employing a LED module as a light source. However, employable light sources are not limited to the LED module. That is, an arbitrary light emitting element of surface light emission such as an EL (Electro Luminescence) device may be employed.

### [Description of Reference Numerals]

3 LED module (light source)
31 LED (light source)
81 power source circuit
82 voltage setting unit
83 voltage dividing unit
831, 832, 833, 834, 835 resistor
836 FET (transistor)
84 operation stopping unit
841 comparator
85 constant current circuit
86 controller
87 receiving unit

## Claims

1. A power source apparatus, comprising:
a power source circuit;
a voltage setting unit setting an upper limit value of a voltage supplied from the power source circuit to a light source; and
a constant current circuit supplying to the light source constant current in response to a light adjusting signal,
wherein the voltage setting unit sets a switching upper limit value for a time point when a state of the light source is switched from a turn off state to a turn on state and a lighting upper limit value for a state where the light source is turned on, and
the switching upper limit value is smaller than the lighting upper limit value.

2. The power source apparatus according to Claim 1, further comprising:
an operation stopping unit stopping, when a voltage is input, an operation of the power source circuit if the voltage is larger than a predetermined threshold voltage; and
a receiving unit receiving a turn on signal and a turn off signal for turning on and off the light source, respectively,
wherein the voltage setting unit includes a voltage dividing unit inputting to the operation stopping unit a voltage obtained by a different division ratio in response to the turn on signal or the turn off signal received by the receiving unit,
the voltage dividing unit inputs to the operation stopping unit the threshold voltage corresponding to a value obtained by dividing the switching upper limit value when the receiving unit receives the turn off signal, and
the voltage dividing unit inputs to the operation stopping unit the threshold voltage corresponding to a value obtained by dividing the lighting upper limit value when the receiving unit receives the turn on signal.

3. The power source apparatus according to Claim 2,
wherein the voltage dividing unit includes a series circuit having a plurality of resistance elements connected in series and a switching resistor which is connected in series or parallel to one of the resistance elements in the series circuit and switches between a conduction state and a non-conduction state in response to the turn on signal and the turn off signal received by the receiving unit.

4. A lighting apparatus, comprising:
a light source; and
the power source apparatus according to any one of Claims 1 to 3.

5. The lighting apparatus according to Claim 4,
wherein the light source is formed by connecting a plurality of LEDs in series and, and
the voltage setting unit sets the switching upper limit value to be smaller than a sum of forward voltage values of the plurality of LEDs.
